# EUROPÄISCHE PATENTSCHRIFT

(11) **EP 2 573 445 B1**
(45) Veröffentlichungstag und Bekanntmachung des Hinweises auf die Patenterteilung: **05.05.2021**
(21) Anmeldenummer: 11007802.9
(22) Anmeldetag: 26.09.2011
(51) Int. Cl.: F16P 3/14, B25J 13/00, B21D 5/02, B23Q 11/00, B30B 15/00, B21D 5/00

(54) **Manipulator**
Manipulator
Manipulateur

(43) Veröffentlichungstag der Anmeldung: 27.03.2013
(73) Patentinhaber: Fiessler Elektronik GmbH & Co. KG, 73734 Esslingen (DE)
(72) Erfinder: Müller, Frank, 73207 Plochingen (DE); Fiessler, Lutz, Dr., 73773 Aichwald (DE)
(74) Vertreter: Patentanwälte Magenbauer & Kollegen Partnerschaft mbB

(56) Entgegenhaltungen:
- EP-A1- 1 522 784
- EP-A2- 1 479 964
- WO-A1-01/33134
- WO-A1-2004/048844
- WO-A1-2006/056300
- DE-A1- 10 026 263
- DE-A1- 19 631 579
- DE-A1-102005 019 097
- DE-B- 1 194 647
- DE-T2- 69 202 195
- FR-A- 1 395 880
- VOSS TH: "ELEKTRONISCHE SICHERHEITSSTEUERUNGEN", UND- ODER- NOR + STEUERUNGSTECHNIK, DISTRIBUTION VERLAG GMBH. MAINZ, DE, Bd. 23, Nr. 11, 1. November 1990 (1990-11-01), Seiten 64-65, XP000172954,

## Beschreibung

Die Erfindung betrifft einen Manipulator zur Durchführung eines Bearbeitungsvorgangs an einem Werkstück, mit einer Steuerungseinrichtung, einer Antriebseinrichtung, einem Bearbeitungswerkzeug und einer Auslöseeinrichtung, die als persönlicher Ausrüstungsgegenstand für einen Benutzer ausgebildet ist, wobei die Antriebseinrichtung von der Steuerungseinrichtung ansteuerbar ist, um eine Bearbeitungsbewegung oder Einstellbewegung hervorzurufen und die Auslöseeinrichtung mit der Steuerungseinrichtung für eine Aktivierung und/oder Deaktivierung der Antriebseinrichtung verbunden ist. Ferner betrifft die Erfindung ein Verfahren zum Betreiben eines Manipulators.

Die DE 10 2005 019 097 A1 offenbart ein Verfahren zur Inbetriebnahme, Justierung, Wartung und/oder Steuerung einer optoelektronischen Schutzeinrichtung für eine Maschine. Mittels einer Sprachausgabeeinrichtung wird wenigstens eine Anweisung zur Inbetriebnahme, Justierung, Wartung und/oder Steuerung der optoelektronischen Schutzeinrichtung der Sprachausgabe an eine Bedienperson ausgegeben. Alternativ oder zusätzlich wird mittels einer Spracherkennungseinrichtung wenigstens ein Sprachbefehl zur Inbetriebnahme, Justierung, Wartung und/oder Steuerung der optoelektronischen Schutzeinrichtung, der von einer Bedienperson erteilt wird, erfasst und ausgewertet.

Aus der WO 01/33134 A1 sind ein Verfahren und eine Vorrichtung zum Erkennen eines von der Umgebung ausgehenden Gefahrenfalls für ein Lebewesen, wie beispielsweise einen Menschen oder ein Tier, an dessen Aufenthaltsort bekannt. Hierbei werden von einem Lebewesen ausgehende, physiologische Signale erfasst und ausgewertet, wobei dann, wenn die physiologischen Signale einen Gefahrenfall erkennen lassen, automatisiert am Aufenthaltsort des Lebewesens Maßnahmen zum Entgegenwirken des Gefahrenfalls ausgelöst werden.

Die WO 2004/048844 A1 717/5000 offenbart ein Not-Sicherheits-Schaltersystem zum Bewegen von Maschinen oder Fahrzeugen. Das Not-Sicherheits-Schaltersystem weist Aktivierungsmittel auf, die von einem Bediener getragen werden und die beispielsweise über eine Funkverbindung mit Steuermitteln an der Maschine oder dem Fahrzeuge kommunizieren, um gegebenenfalls den normalen Betrieb der Maschine bzw. des Fahrzeugs außer Kraft setzen zu können. Im Notfall drückt der Bediener einen Knopf oder gibt einen Befehl oder einen Ruf aus, um das System zu aktivieren. Das System stoppt die Maschine oder das Fahrzeug, löst einen Alarm aus und kann den Betrieb teilweise rückgängig machen. In Bereichen mit höherem Risiko kann eine Reduzierung einer Aktivierungsschwelle vorgesehen werden, die erforderlich ist, um das Fahrzeug zu deaktivieren.

Aus der DE 196 31 579 A1 ist eine Not-Aus-Einrichtung zur Deaktivierung einer Maschine durch einen verbalen Befehl bekannt. Diese Not-Aus-Einrichtung basiert auf der Erfahrung, daß das Bedienpersonal von Maschinen in einer Notlage zuerst verbal reagiert, bevor es sich an die Existenz einer Not-Aus-Einrichtung erinnert, um diese anschließend betätigen zu können. Die akustische Not-Aus-Einrichtung hat den Vorteil, daß die Reaktionszeit des Bedienpersonals erheblich verkürzt wird. Dadurch wird praktisch ein sofortiges Stoppen der Maschine ermöglicht und wertvolle Sekundenbruchteile gewonnen. Außerdem ist ein Stoppen auch noch möglich, wenn das Bedienpersonal nicht mehr in der Lage ist, die Not-Aus-Einrichtung zu betätigen.

Die DE 100 26 263 A1 offenbart einer Steuerungseinrichtung für eine industrielle technische Anlage, bei der von einer Bedienperson Ansteuerbefehle vorgebbar sind, aufgrund derer Zustandsänderungen der Anlage ausgelöst werden. Hierzu wird von der Bedienperson einem Signalgeber akustisch ein Sprachbefehl eingegeben. Der Signalgeber übermittelt ein aus dem Sprachbefehl abgeleitetes Transmissionssignal leitungsfrei an die Steuerungseinrichtung, die daraus den Ansteuerbefehl (S) für die Anlage ermittelt.

Aus der DE 11 94 647 B ist eine Sicherheitsvorrichtung zum selbsttätigen Abstellen einer Arbeitsmaschine durch ein elektrisches Schaltrelais, das über einen Verstärkungstransformator von einem auf tonfrequente Schwingungen ansprechenden, am Arbeiter befestigten Schallempfänger betätigt wird, wobei der Verstärkungstransformator eine derartige Frequenzcharakteristik hat, daß auch der Impuls, der beim Abreißen der Verbindung zwischen dem als Laryngophon ausgebildeten Schallempfänger und dem Transformator entsteht, mit ausreichender Intensität auf dessen Sekundärseite übertragen wird.

Die FR 1 395 880 A offenbart eine sprachgesteuerte Steueranordnung zum Abschalten von elektrisch betriebenen Geräten und kann als Sicherheitsvorrichtung beispielhaft in Kombination mit potentiell gefährlichen Mechanismen wie Bohrmaschinen. Drehmaschinen, Fräsmaschinen und ähnliche Maschinen und umfasst hierzu eine Steuereinheit, die durch die Stimme derart betätigt wird, dass das gesteuerte Gerät, nachdem es gestoppt wurde, einfach durch Öffnen und Schließen wieder gestartet werden kann.

Die DE 43 141 04 A1 offenbart eine Einrichtung zur Befestigung eines einen Arbeitshub auslösenden Fußpedals an einer Stanz- oder Pressmaschine, insbesondere an einer Gesenkbiegepresse, mit einer das zu bearbeitende Werkstück aufnehmenden Arbeitsfläche, wobei das Fußpedal über ein Gestänge gerätefest mit der Gesenkbiegepresse verbunden und im Fußbereich der Gesenkbiegepresse lageverschiebbar geführt angeordnet ist. Damit sollen die Nachteile von losen Fußpedalen, die zur Stanz- und Pressenbedienung eingesetzt werden, überwunden werden, da sich solche losen Fußpedale ständig ungewollt verdrehen und verschieben, wobei auch das Mitführen des Arbeitspedals während eines Arbeitsganges erschwert ist. Der Bediener der Gesenkbiegepresse muss vor dem Auslösen eines Arbeitshubes zuerst das Pedal in die richtige Lage drehen, um seinen Fuß unter den aus arbeitsschutztechnischen Gründen vorhandenen Käfig auf das eigentliche Pedal bringen zu können. Das erfordert zusätzliche Zeit und lenkt die Aufmerksamkeit des Bedieners von seiner eigentlichen Aufgabe bei der Bedienung der Presse ab.

Die Aufgabe der Erfindung besteht darin, einen Manipulator und ein Verfahren zur Durchführung eines Bearbeitungsvorgangs bereitzustellen, bei denen eine besonders flexible Bedienung gewährleistet ist.

Diese Aufgabe wird gemäß einem ersten Aspekt für einen Manipulator der eingangs genannten Art mit den Merkmalen des Anspruchs 1 gelöst. Hierbei ist vorgesehen, dass die Auslöseeinrichtung einen Schallempfänger für einen Empfang von Steuerbefehlen eines Bedieners umfasst und zur Bereitstellung eines Signals an die Steuerungseinrichtung bei Eintreffen eines Steuerbefehls ausgebildet ist. Durch den Einsatz des Schallempfängers ist es möglich, einen Handhabungsvorgang und/oder einen Bearbeitungsvorgang und/oder einen Einstellvorgang für den Manipulator auszulösen, ohne dass hierfür die Betätigung eines Fußpedals durch einen Bediener notwendig ist. Vielmehr ist es ausreichend, wenn der Bediener ein, vorzugsweise exakt definiertes, Schallsignal als Steuerbefehl erzeugt, beispielsweise durch Aussprechen eines Wortes oder durch Hervorrufen eines Geräuschs, beispielsweise eines Tons oder einer Tonfolge, oder durch Anstoßen eines Körperteils, insbesondere des Fußes, an einem Bauteil des Manipulators oder dem Boden, auf dem der Manipulators aufgestellt ist. Durch diese Erzeugung des Schallsignals ist es nicht notwendig, dass der Bediener sich an einem exakt vorgegebenen Ort am Manipulator aufhält, um eine Fußtaste zu drücken, wie dies aus dem Stand der Technik hervorgeht. Vielmehr kann sich der Bediener an einem für die Werkstückhandhabung vorteilhaften Ort in unmittelbarer Nähe des Manipulators aufhalten und durch die Erzeugung des Schallsignals den Handhabungs- und/oder Bearbeitungsvorgang durch den Manipulator auslösen.

Zweckmäßig ist es, wenn die Auslöseeinrichtung und/oder die Steuerungseinrichtung eine Speichereinrichtung, in der Signalmuster für Steuerbefehle gespeichert sind sowie Verarbeitungsmittel zum Vergleich der gespeicherten Signalmuster mit eintreffenden Signalen umfasst, um bei einer Übereinstimmung eines eingetroffenen Signals mit einem gespeicherten Signalmuster ein Steuersignal an die Antriebseinrichtung bereitzustellen. Bei einer ersten Ausführungsform der Erfindung sind die Speichereinrichtung und die Verarbeitungsmittel der Auslöseeinrichtung zugehörig, so dass vom Schallempfänger empfangene Schallsignale des Bedieners unmittelbar mit gespeicherten Signalmustern verglichen werden können und bei Übereinstimmung zwischen dem eintreffenden Signal und dem gespeicherten Signalmuster ein korrespondierendes Steuersignal an die Steuerungseinrichtung bereitgestellt werden kann. Bei dieser Ausführungsform verhält sich die Auslöseeinrichtung wie ein konventionelles Fußpedal, so dass eine Nachrüstung einer derartigen Auslöseeinrichtung an einen bestehenden Manipulator vorgesehen werden kann. Die bauliche Aufteilung von Schallempfänger, Speichereinrichtung und Verarbeitungsmitteln in eine oder mehrere Baugruppen, die räumlich getrennt voneinander angeordnet werden können, kann je nachdem Anforderungen des Einsatzfalls für die Auslöseeinrichtung gewählt werden. Bei einer zweiten Ausführungsform sind die Speichereinrichtung und die Verarbeitungsmittel der Steuerungseinrichtung zugeordnet, vorzugsweise direkt, insbesondere hard- und/oder softwaremäßig, in die Steuerungseinrichtung eingebunden. Hierdurch kann erreicht werden, dass im Gegensatz zu einem bekannten Fußschalter, der üblicherweise genau eine Schaltfunktion zur Verfügung stellt, eine vorgebbare Anzahl unterschiedlicher Schaltfunktionen erzielt werden, die durch eindeutige, vom Bediener gut voneinander unterscheidbare Steuerbefehle angesprochen werden können. Vorzugsweise sind die Speichereinrichtung und die Verarbeitungsmittel lernfähig ausgebildet, so dass sie auf die vom Bediener bereitgestellten Steuerbefehle, beispielsweise sprachliche Eigenheiten des Bedieners und/oder an Umgebungsbedingungen wie Lärm besonders vorteilhaft angepasst werden können.

Vorteilhaft ist es, wenn die Verarbeitungsmittel derart ausgebildet sind, dass bei Eintreffen eines nicht gespeicherten Signalmusters eine Bereitstellung eines Stoppsignals an die Steuerungseinrichtung erfolgt. Somit kann einerseits eine unerwünschte Bedienung des Manipulators vermieden werden, andererseits wird hierdurch im Notfall, beispielsweise wenn der Bediener erkennt, dass eine Fehlfunktion des Manipulators eintritt oder unmittelbar bevorsteht, durch ein beliebiges Schallsignal, das nicht von den gespeicherten Signalmustern umfasst ist, die gewünschte Abschaltung des Manipulators, insbesondere die Überführung des Manipulators in einen sicheren Zustand, gewährleistet.

In weiterer Ausgestaltung der Erfindung ist vorgesehen, dass die Auslöseeinrichtung und die Steuerungseinrichtung für eine drahtlose Signalübertragung zwischen der Auslöseeinrichtung und der Steuerungseinrichtung ausgebildet sind. Somit kann sich der Bediener frei bewegen und das oder die zu bearbeitenden Werkstücke in ergonomischer Hinsicht möglichst optimal in den Manipulator einlegen oder in anderer Weise bereitstellen. Als Mittel zur drahtlosen Signalübertragung können insbesondere optische Kommunikationsmittel oder Funkkommunikationsmittel vorgesehen werden.

Bei einer Weiterbildung der Erfindung ist vorgesehen, dass die Auslöseeinrichtung und die Steuerungseinrichtung jeweils eine Sende-Empfangseinrichtung umfassen, die für eine bidirektionale Signalübertragung zwischen der Auslöseeinrichtung und der Steuerungseinrichtung ausgebildet ist. Mit Hilfe der bidirektionalen Signalübertragung kann in regelmäßigen oder unregelmäßigen Abständen überprüft werden, ob noch eine Kommunikationsverbindung zwischen der Auslöseeinrichtung und der Steuerungseinrichtung vorliegt. Dies ist beispielsweise von Interesse, wenn der Bediener zunächst durch einen korrekten Steuerbefehl einen Bearbeitungsvorgang ausgelöst hat, sich jedoch nach Auslösen des Handhabungs- und/oder Bearbeitungsvorgangs vom Manipulator entfernt und somit nicht mehr die Kontrolle über den Handhabungs- und/oder Bearbeitungsvorgang ausübt oder durch Ausfalls der Auslöseeinrichtung keine weitere Übertragung von Steuerbefehlen möglich ist. Durch die bidirektionale Signalübertragung wird überwacht, ob noch die Möglichkeit besteht, Steuerbefehle zur Einflussnahme von der Auslöseeinrichtung auf den Manipulator zu übertragen.

Bevorzugt sind die Sende-Empfangseinrichtungen für eine Signalübertragung auf wenigstens zwei unterschiedlichen Übertragungswegen, insbesondere auf unterschiedlichen Übertragungskanälen, ausgebildet. Durch die Nutzung unterschiedlicher Übertragungswege, bei denen es sich beispielsweise um unterschiedliche Lichtwellenlängen oder Funkfrequenzen handeln kann, wird die Störungssicherheit für die Signalübertragung verglichen mit einer Übertragung auf einem einzelnen Übertragungsweg erheblich erhöht.

Zweckmäßig ist es, wenn die Sende-Empfangseinrichtungen der Auslöseeinrichtung und der Steuerungseinrichtung für eine Bestimmung eines Abstands und/oder einer Positionierung der Auslöseeinrichtung gegenüber der Steuerungseinrichtung ausgebildet sind. Unter Verwendung der Informationen, die durch die Abstands- und/oder Positionsbestimmung gewonnen werden, kann die Steuereinrichtung beispielsweise derart programmiert werden, dass eine Auslösung eines Handhabungs- und/oder Bearbeitungsvorgangs blockiert wird, wenn sich der Bediener beispielsweise in einem Gefahrenbereich aufhält. Ergänzend oder alternativ kann vorgesehen werden, dass unterschiedliche Operationen des Manipulators in Abhängigkeit vom Aufenthaltsort der Auslöseeinrichtung und des Bedieners auslösbar sind, so dass ein ortsabhängig ansteuerbarer Funktionsumfang des Manipulators vorliegt.

Erfindungsgemäß ist hierbei die Auslöseeinrichtung als persönlicher Ausrüstungsgegenstand ausgebildet, den der Bediener am Körper trägt, um sicherzustellen, dass die Position der Auslöseeinrichtung mit der Position des Bedieners übereinstimmt. Die Auslöseeinrichtung kann vorzugsweise mit einer Selbstdiagnoseeinrichtung überprüfen, ob sie am Körper des Bedieners getragen wird, beispielsweise durch geeignete Sensoren, insbesondere aus der Gruppe Pulsmessgerät, Hautwiderstandssensor, Temperatursensor, Beschleunigungssensor.

Zweckmäßig ist es, wenn die Steuerungseinrichtung zur Bereitstellung eines Stoppsignals ausgebildet ist, sofern die Sende-Empfangseinrichtung eine Abstandsunterschreitung und/oder eine Abstandsüberschreitung und/oder eine Positionsabweichung und/oder eine Unterbrechung der Signalübertragung von der Auslöseeinrichtung ermittelt. Damit kann eine vorteilhafte Absicherung von räumlichen Abschnitten um den Manipulator herum gewährleistet werden, in denen möglicherweise eine Gefährdung des Bedieners vorliegen könnte. Vorzugsweise werden der Abstand und/oder die Position des Bedieners relativ zum Manipulator stetig durch Signalübertragung zwischen der Auslöseeinrichtung und der Steuerungseinrichtung überprüft und mit einem vorgebbaren, in der Steuerungseinrichtung abgelegten, insbesondere programmierbaren, Positionsmuster verglichen. In dem Positionsmuster können Bereiche vorgegeben sein, die zur Bereitstellung eines Stoppsignals führen, wenn sich der Bediener mit der Auslöseeinrichtung in diesem Bereich aufhalten sollte. Ergänzend können in dem Positionsmuster auch Bereiche ausgewiesen werden, in denen nur bestimmte Operationen des Manipulators abrufbar sind.

In weiterer Ausgestaltung der Erfindung ist vorgesehen, dass die Sende-Empfangseinrichtung für eine codierte Signalübertragung ausgebildet ist. Die Codierung dient in der Art eines Schlüssels oder Passworts dazu, die möglicherweise von unterschiedlichen Sende-Empfangseinrichtungen bereitgestellten Signale voneinander zu unterscheiden und nur diejenigen Signale auszuwerten, die von der jeweils zugeordneten Sende-Empfangseinrichtung bereitgestellt werden.

Bei einer vorteilhaften Weiterbildung der Erfindung ist vorgesehen, dass die Sende-Empfangseinrichtung redundant ausgebildete Sende- und Empfangsmittel aufweist. Eine derart ausgebildete Sende-Empfangseinrichtung umfasst somit wenigstens zwei Sendemittel und wenigstens zwei Empfangsmittel. Die unterschiedlichen Sende- und Empfangsmittel der Sende-Empfangseinrichtung ermöglichen einerseits eine parallele Signalübertragung auf unterschiedlichen Übertragungswegen, beispielsweise mit unterschiedlichen Frequenzen und/oder unterschiedlichen Codierungen. Zudem kann hierdurch erreicht werden, dass bei Ausfall einzelner Sende- und/oder Empfangsmittel die Signalübertragung zwischen der Auslöseeinrichtung und der Steuerungseinrichtung zumindest noch so lange aufrechterhalten werden kann, bis der Manipulator in einen sicheren Zustand überführt wurde.

Vorzugsweise ist der Schallempfänger als Mikrofon, insbesondere als Körperschallmikrofon, ausgebildet. Das Mikrofon ist zur Umwandlung von Schallwellen, die durch die Luft übertragen werden, in elektrische Spannungs- und/oder Stromänderungen ausgebildet und kann somit zur Erfassung von gesprochenen Worten oder anderen über die Luft übertragenen Geräuschen dienen. Bei einer Ausgestaltung des Schallempfängers als Körperschallmikrofon werden beispielsweise Beschleunigungen ermittelt, wie sie an der Körperoberfläche des Bedieners auftreten können, wenn dieser spricht und/oder in anderer Weise Töne erzeugt und/oder durch Anstoßen eines Körperteils, insbesondere des Fußes, an einem Bauteil des Manipulators oder dem Boden, auf dem der Manipulator aufgestellt ist. Die hierdurch hervorgerufenen, vom Körperschallmikrofon messbaren Schwingungen der Körperoberfläche werden mit vorgebbaren Signalmustern verglichen und bei weitgehender oder vollständiger Übereinstimmung mit diesen Signalmustern als Steuerbefehle interpretiert. Vorzugsweise ist vorgesehen, dass für unterschiedliche Steuerbefehle auch unterschiedliche große Abweichungen zwischen den ermittelten Signalen und den vorgebbaren Signalmustern akzeptiert werden, um eine Übereinstimmung von Signal und Signalmuster festzustellen. So kann beispielsweise vorgesehen werden, für Steuerbefehle, die möglicherweise zur Operationen des Manipulators führen, denen ein erhebliches Gefahrenpotential innewohnt, nur geringe Abweichungen von Signal und Signalmuster zuzulassen während bei unkritischen Steuerbefehlen eine größere Abweichung akzeptiert werden kann. Zur Ermittlung der Abweichung zwischen Signal und Signalmuster kann das Verarbeitungsmittel beispielsweise zur Durchführung eines Rechenalgorithmus ausgebildet sein.

Erfindungsgemäß ist vorgesehen, dass die Auslöseeinrichtung wenigstens einen Sensor aus der Gruppe: Neigungssensor, Geschwindigkeitssensor, Beschleunigungssensor, Positionssensor, umfasst. Mit wenigstens einem Sensor aus dieser Gruppe kann detektiert werden, ob sich der Bediener möglicherweise in einer Situation befindet, in der der Betrieb des Manipulators gestoppt werden muss. Beispielsweise kann die Situation eintreten, dass während des Betriebs des Manipulators die handzuhabenden und/oder zu bearbeitenden Werkstücke unerwartete Bewegungen ausführen, insbesondere durch fehlerhafte Einspannung am Manipulator oder durch Werkzeugbruch. In dieser Situation kann es erforderlich sein, den Bearbeitungsvorgang möglichst schnell abzubrechen, um Schaden zu vermeiden. Wenn der Bediener in dieser Situation beispielsweise eine rasche Bewegung ausführt, um sich aus dem Gefahrenbereich zu entfernen, kann dies von einem entsprechenden Sensor detektiert werden, um mittels der Auslöseeinrichtung ein Stoppsignal an den Manipulator bereitstellen.

Ferner ist erfindungsgemäß vorgesehen, dass die Auslöseeinrichtung für eine Auswertung eines Sensorsignals des wenigstens einen Sensors ausgebildet sind, um bei Vorliegen einer Signaldifferenz zwischen dem Sensorsignal und einem vorgebbaren Sensorsignalpegel ein Stoppsignal bereitzustellen.

Die Aufgabe der Erfindung wird gemäß einem zweiten Aspekt durch ein Verfahren gemäß Anspruch 12 gelöst. Hierbei ist vorgesehen, dass die Auslöseeinrichtung bei Eintreffen eines Schallsignals einen Vergleich mit vorgebbaren Signalmustern vornimmt und bei Vorliegen einer Übereinstimmung zwischen Signal und Signalmuster von der Steuerungseinrichtung ein Steuersignal zur Ansteuerung der Antriebseinrichtung bereitgestellt wird. Hierdurch wird eine Steuerung des Manipulators ermöglicht, ohne dass der Bediener in körperlichen Kontakt mit dem Manipulator treten muss, wodurch eine verbesserte Flexibilität bei der Bedienung erreicht wird.

Bei einer Weiterbildung des Verfahrens wird aufgrund des Schallsignals oder eines Signals einer Sensoreinrichtung ein Stoppsignal von der Auslöseeinrichtung an die Steuerungseinrichtung übertragen, wenn keine Übereinstimmung zwischen dem Schallsignal und vorgegebenen Signalmustern ermittelt werden kann oder wenn anhand des Signals der Sensoreinrichtung ein Gefährdungszustand ermittelt wird. Bei dem Gefährdungszustand kann es sich um einen gefährlichen Zustand für den Manipulator und/oder für den Bediener und/oder für das Werkstück handeln. Ein Gefährdungszustand kann beispielsweise vorliegen, wenn der Bediener das Bewusstsein verloren hat oder sich außerhalb eines vorgebbaren Raumbereichs um den Manipulator oder sich innerhalb eines Gefährdungsbereichs nahe des Manipulators aufhält.

Eine vorteilhafte Ausführungsform der Erfindung ist in der Zeichnung dargestellt. Hierbei zeigt:
- Figur 1: einen Manipulator sowie eine Auslöseeinrichtung zur Benutzung durch einen Bediener,
- Figur 2: ein schematisches Blockschaltbild mit den für die Übertragung von Steuerbefehlen zwischen der Auslöseeinrichtung und einer Steuerungseinrichtung wesentlichen Komponenten.

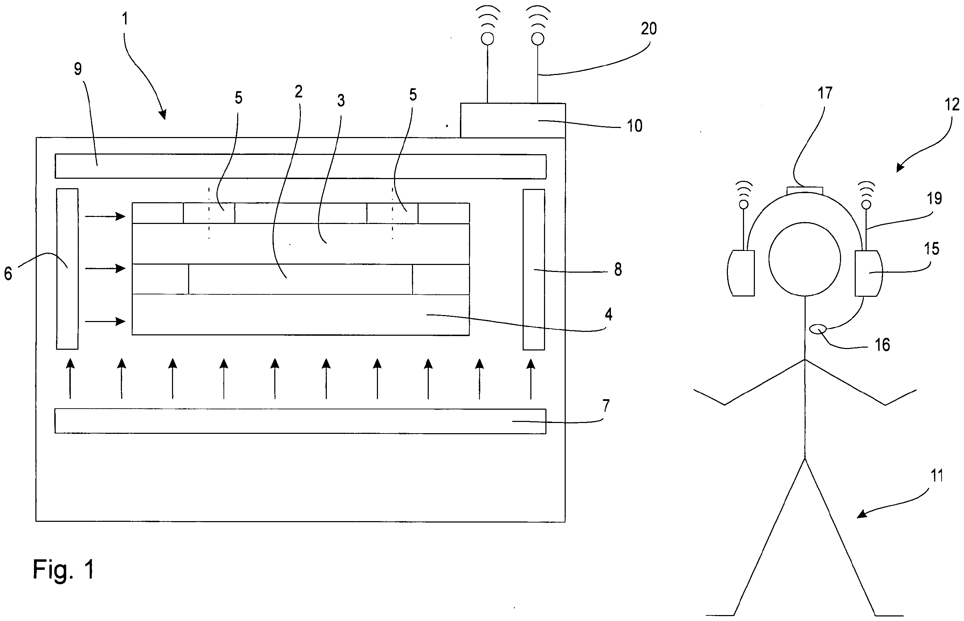

In der Figur 1 ist ein Manipulator 1 schematisch dargestellt, hierbei handelt es sich exemplarisch um eine Abkantpresse für die linienförmige Umformung von Werkstücken 2, insbesondere von Blechteilen.

Der Manipulator 1 umfasst exemplarisch ein als obere Biegewange 3 ausgebildetes Werkzeug und ein als untere Biegewange 4 ausgebildetes Gegenwerkzeug, die für die Bearbeitung des Werkstücks 2, beispielsweise durch lokale linienförmige Deformation, ausgebildet sind. Die untere Biegewange 4 ist ortsfest am Manipulator 1 festgelegt, die obere Biegewange kann mittels zweier Hydraulikstempel 5 in vertikaler Richtung auf- und abbewegt werden. Um einen zwischen der oberen Biegewange 3 und der unteren Biegewange 4 ausgebildeten, nicht näher bezeichneten Arbeitsspalt gegen manuelle Eingriffe eines Bedieners abzusichern, sind zwei Lichtvorhänge vorgesehen, die jeweils einen leistenförmig ausgebildeten Sender 6, 7 und einen jeweils gegenüberliegend angeordneten und ebenfalls leistenförmig ausgebildeten Empfänger 7, 9 umfassen.

Die Lichtvorhänge können gegebenenfalls über einen oder mehrere Teilbereiche ihrer Erstreckung abgeschaltet werden, um eine Anpassung der Sicherungsfunktion an unterschiedliche Gegebenheiten zu ermöglichen. Der Manipulator 1 umfasst weiterhin eine Steuerungseinrichtung 10, die zur Ansteuerung einer nicht dargestellten Antriebseinrichtung vorgesehen ist, um die Relativbewegung der beiden Biegewangen 3, 4 zueinander zu bewirken.

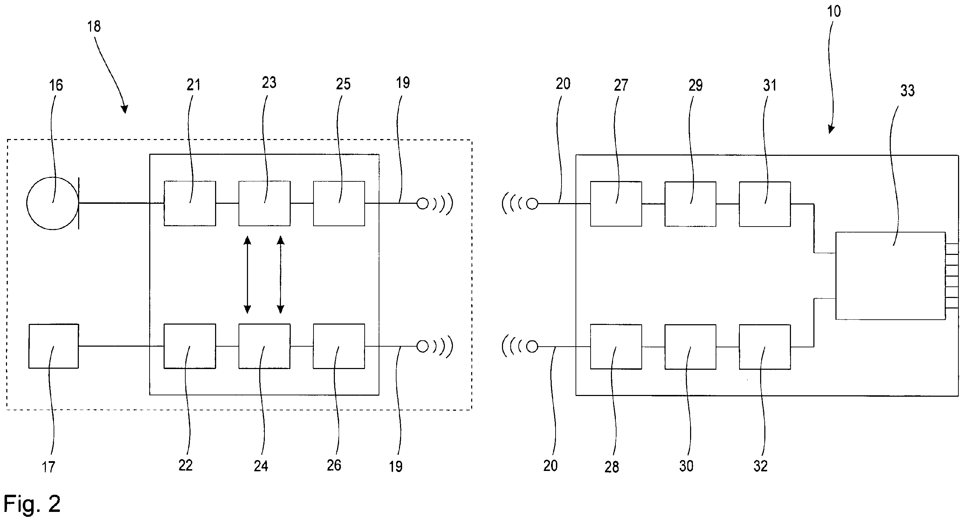

Ein Bediener 11, der den Manipulator 1 nutzen kann, um Werkstücke 2 wunschgemäß zu bearbeiten, trägt eine Auslöseeinrichtung 12 exemplarisch auf dem Kopf. Die Auslöseeinrichtung 12 ist vorliegend in der Art eines Kopfhörers ausgebildet und umfasst beispielhaft mit Lautsprechern versehene Gehörschutzkapseln 15, ein Mikrofon 16, eine Sensoreinrichtung 17 sowie eine in den Gehörschutzkapseln 15 aufgenommene, in der Figur 2 näher dargestellte Verarbeitungseinrichtung 18 und damit gekoppelte Antennen 19. Mit Hilfe der Auslöseeinrichtung 12 kann der Bediener den Manipulator 1 steuern, um die gewünschten Bearbeitungsvorgänge an Werkstücken 2 vornehmen zu können.

Exemplarisch ist eine drahtlose Signalübertragung zwischen der Auslöseeinrichtung 12 und der Steuerungseinrichtung 10 vorgesehen. Hierfür kann beispielsweise eine Funkverbindung eingesetzt werden, dementsprechend sind sowohl die Auslöseeinrichtung 12 als auch die Steuerungseinrichtung 10 mit Antennen 19, 20 versehen, die der Aussendung und dem Empfang von Funksignalen dienen. Die entsprechenden Steuerbefehle zur Bedienung des Manipulators 1 werden vom Bediener 11 mittels Eingaben in das Mikrofon 16 und ergänzend oder alternativ durch gezielte Beeinflussung der Sensoreinrichtung 17 ausgelöst. Ein unmittelbarer körperlicher Kontakt zwischen dem Bediener 11 und dem Manipulator 1 für die Übertragung von Steuerbefehlen, wie dies im Fall eines bekannten Fußschalters notwendig ist, entfällt bei der Aufbauweise des Manipulators 1, wie sie in der Figur 1 dargestellt ist. Ergänzend oder alternativ kann eine drahtlose Signalübertragung auch über eine optische Kopplung von Auslöseeinrichtung und Steuerungseinrichtung vorgesehen sein. Bei einer weiteren Ausführungsform der Erfindung ist eine Kabelverbindung zwischen der Auslöseeinrichtung und der Steuerungseinrichtung vorgesehen, die die Übertragung der Signale ermöglicht.

Aus dem in der Figur 2 dargestellten Blockschaltbild ist der Aufbau der Auslöseeinrichtung 12 und der Steuerungseinrichtung 10 zu entnehmen. Die Auslöseeinrichtung 12 umfasst die Verarbeitungseinrichtung 18, an die beispielhaft das Mikrofon 16 und die Sensoreinrichtung 17 angeschlossen sind. Exemplarisch ist das Mikrofon 16 an einem ersten Verstärker 21 angeschlossen während die Sensoreinrichtung 17 an einem zweiten Verstärker 22 angeschlossen ist. Die vom Mikrofon 16 und von der Sensoreinrichtung 17 bereitgestellten Signale werden in den jeweils zugeordneten Verstärkern 21, 22 verstärkt und an nachgeschaltete Prozessoren 23, 24, insbesondere Mikroprozessoren oder Mikrocontroller, weitergeleitet. In den Prozessoren 23, 24 findet jeweils eine Verarbeitung der bereitgestellten Signale statt. Vorzugsweise ist ein Datenaustausch zwischen den Prozessoren 23, 24 vorgesehen, so dass beispielsweise die im Prozessor 23 verarbeiteten Signale des Mikrofons 16 an den Prozessor 24 übergeben werden und ergänzend oder alternativ die im Prozessor 24 verarbeiteten Signale der Sensoreinrichtung 17 an den Prozessor 23 weitergegeben werden. Somit kann in beiden Prozessoren 22, 23 jeweils eine Verarbeitung und/oder Weiterleitung sämtlicher Signale vorgenommen werden. Vorzugsweise wird in den Prozessoren 23, 24 ein Vergleich der Signale mit gespeicherten Signalmustern vorgenommen, um zu ermitteln, ob der Bediener 11 einen Steuerbefehl an die Steuerungseinrichtung 10 weiterleiten möchte.

Sofern sich beim Vergleich der Signale mit den gespeicherten Signalmustern ergibt, dass der Bediener 11 durch eine entsprechende Eingabe einen Steuerbefehl an die Steuerungseinrichtung 10 übermitteln möchte, können die Prozessoren 23, 24 das Vergleichsergebnis mit dem jeweils anderen Prozessor 23, 24 abgleichen und bei Vorliegen eines identischen Vergleichsergebnisses jeweils die Ansteuerung einer Sende-und Empfangseinrichtung 25, 26 bewirken. Die Sende- und Empfangseinrichtung 25, 26 sendet dann ein dem zu übertragenden Steuerbefehl entsprechendes, vorzugsweise codiertes, Steuersignal drahtlos an die Steuerungseinrichtung 10. Dieses Steuersignal kann von den Antennen 20 der Steuerungseinrichtung 10 empfangen werden und intern in der Steuerungseinrichtung 10 in ein entsprechendes Ansteuersignal für die nicht dargestellte Antriebseinrichtung umgesetzt werden.

Hierzu sind in der Steuerungseinrichtung 10 ebenfalls Sende-und Empfangseinrichtungen 27, 28, Verstärker 29, 30 sowie Prozessoren 31, 32 vorgesehen. Die Prozessoren 31, 32 sind jeweils mit einer internen Schnittstellenanordnung 33 verbunden, bei der es sich beispielsweise um eine Schnittstelle für ein internes Bussystem des Manipulators 1 handelt.

Bei der Sensoreinrichtung 17 kann es sich um einen Neigungssensor, einen Geschwindigkeitssensor, einen Beschleunigungssensor, einen Positionssensor, einen Schwingungssensor, insbesondere um ein Körperschallmikrofon oder um eine Kombination derartiger Sensoren handeln.

Zur Auslösung einer Operation des Manipulators 1 kann der Bediener 11 durch eine Ton- oder Spracheingabe in das Mikrofon 16 und/oder durch eine geeignete Körperbewegung, durch die beispielsweise eine Schwingung hervorgerufen wird, die von der Sensoreinrichtung 17 detektiert werden kann, zunächst wenigstens ein Signal an die Verarbeitungseinrichtung 18 bereitstellen. In der Verarbeitungseinrichtung 18 wird das Signal zunächst mittels des zugeordneten Verstärkers 21, 22 verstärkt und von dem jeweils zugeordneten Prozessor 23, 24 verarbeitet. Bei der Verarbeitung im jeweiligen Prozessor 23, 24 wird das Signal mit einem vorgebbaren, insbesondere programmierbaren, Signalmuster verglichen, das in einer nicht dargestellten Speichereinrichtung abgespeichert ist.

Beispielsweise kann vor der ersten Bedienung des Manipulators 1 durch einen neuen Bediener 11 vorgesehen sein, dass der neue Bediener 11 zunächst ein oder mehrere Spracheingabesignale, die von der Verarbeitungseinrichtung 18 vorgegeben werden, wiedergeben muss, um der Verarbeitungseinrichtung 18 einen Lernprozess und damit eine Anpassung auf die individuelle Charakteristik des Bedieners 11 und gegebenenfalls vorliegender Umgebungsgeräusche zu ermöglichen. Diese individuelle Charakteristik des Bedieners 11 kann gegebenenfalls in der Verarbeitungseinrichtung gespeichert werden.

Um sicherzustellen, dass sich der Bediener 11 innerhalb eines vorgebbaren Raumbereichs um den Manipulator 1 aufhält, kann eine Abstands- und/oder Positionsbestimmung durch die Verarbeitungseinrichtung 18 und die Steuerungseinrichtung 10 vorgesehen sein. Ergänzend oder alternativ kann vorgesehen werden, die zur Verfügung stehenden Steuerbefehle von der Position des Bedieners 11 gegenüber dem Manipulator 1 abhängig zu machen, um beispielsweise bestimmte Operationen zu verhindern, wenn sich der Bediener 11 in einem vorgebaren Gefahrenbereich aufhält.

Nachdem die Signale in den Prozessoren 23, 24 mit den Signalmustern verglichen wurden, erfolgt von den Prozessoren 23, 24 in Abhängigkeit vom Vergleichsergebnis eine Ausgabe eines Steuersignals an die Steuerungseinrichtung 10. Dabei wird das Steuersignal über die jeweils zugeordneten Sende- und Empfangseinrichtungen 25 und 27 bzw. 26 und 28, die jeweils separate Übertragungskanäle bilden und gegebenenfalls für eine unterschiedlich codierte Signalübertragung eingerichtet sind, drahtlos übertragen werden. Anschließend wird das Steuersignal in den jeweils zugeordneten Verstärkern 29, 30 verstärkt und in den Prozessoren 31, 32 verarbeitet, um dann an die Schnittstellenanordnung 33 übertragen zu werden. In der Schnittstellenanordnung 33 kann geprüft werden, ob über beide Übertragungskanäle das gleiche Steuersignal übertragen wurde. Sofern dies der Fall ist, kann über das interne Bussystem des Manipulators 1 die gewünschte Operation ausgeführt werden.

Um zu gewährleisten, dass der Bediener 11 auch zum Zeitpunkt der Durchführung der Operation innerhalb eines vorgebbaren Raumbereichs nahe des Manipulators 1 verbleibt, findet gegebenenfalls eine, insbesondere wiederkehrende, Prüfung der Anwesenheit des Bedieners 11 statt. Hierzu wird von den beiden Prozessoren 31, 32 jeweils ein Prüfsignal über die jeweiligen Sende- und Empfangseinrichtungen 25 und 27 bzw. 26 und 28 an die Verarbeitungseinrichtung 18 gesendet und dort mit einem Antwortsignal quittiert, sofern sich der Bediener 11 im vorgegebenen Raumbereich aufhält. Erfolgt keine Quittierung des Prüfsignals innerhalb eines vorgebbaren Zeitraums, so wird der Manipulator 1 von der Steuerungseinrichtung 10 in einen sicheren Zustand überführt. Durch eine derartige Maßnahme kann ergänzend oder alternativ sichergestellt werden, dass die Verbindung zwischen Auslöseeinrichtung 12 und Steuerungseinrichtung 10 ununterbrochen fortbesteht. Sofern festgestellt wird, dass die Verbindung unterbrochen ist, kann die Steuerungseinrichtung 10 derart ausgebildet sein, dass sie den Manipulator 1 in einen sicheren Zustand überführt.

In gleicher Weise kann eine Überführung des Manipulators 1 in einen sicheren Zustand vorgesehen sein, wenn beispielsweise mittels der Sensoreinrichtung 17 eine unerwartete Bewegung des Bedieners 11, beispielsweise über den Beschleunigungssensor, ermittelt wird. Ein solcher Fall kann beispielsweise eintreten, wenn der Bediener das Bewusstsein verliert und zu Boden fällt. Ebenso kann wiederkehrend, beispielsweise über einen Puls- und/oder Temperatur- und/oder Hautwiderstandssensor der Sensoreinrichtung 17 geprüft werden, ob der Bediener 11 die Auslöseeinrichtung 12 noch trägt oder eventuell abgelegt hat. In letzterem Fall wird der Manipulator 1 ebenfalls in einen sicheren Zustand überführt.

Erkennt die Auslöseeinrichtung 12 eine Signaleingabe über das Mikrofon 16 oder über die Sensoreinrichtung 17 und kann diesem Signal kein eindeutiger Steuerbefehl zugeordnet werden, so kann vorgesehen sein, dass ein solches Signal als Stoppsignal gewertet wird und ebenfalls zu einer Überführung des Manipulators 1 in einen sicheren Zustand führt.

## Patentansprüche

1. Manipulator zur Durchführung eines Handhabungs- und/oder Bearbeitungsvorgangs an einem Werkstück (2), mit einer Steuerungseinrichtung (10), einer Antriebseinrichtung, einem Handhabungs- und/oder Bearbeitungswerkzeug (3, 4) und einer Auslöseeinrichtung (12), die als persönlicher Ausrüstungsgegenstand für einen Bediener ausgebildet ist, wobei die Antriebseinrichtung von der Steuerungseinrichtung (10) ansteuerbar ist, um eine Handhabungsbewegung und/oder eine Bearbeitungsbewegung und/oder eine Einstellbewegung hervorzurufen und die Auslöseeinrichtung (12) mit der Steuerungseinrichtung (10) für eine Aktivierung und/oder Deaktivierung der Antriebseinrichtung verbunden ist, wobei die Auslöseeinrichtung (12) einen Schallempfänger (16, 17) für einen Empfang von Steuerbefehlen des Bedieners (11) umfasst und zur Bereitstellung eines Signals an die Steuerungseinrichtung (10) bei Eintreffen eines Steuerbefehls ausgebildet ist, **dadurch gekennzeichnet, dass** die Auslöseeinrichtung (12) wenigstens einen Sensor (17) aus der Gruppe: Neigungssensor, Geschwindigkeitssensor, Beschleunigungssensor, Positionssensor, umfasst und dass die Auslöseeinrichtung (12) für eine Auswertung eines Sensorsignals des wenigstens einen Sensors (17) ausgebildet sind, um bei Vorliegen einer Signaldifferenz zwischen dem Sensorsignal und einem vorgebbaren Sensorsignalpegel ein Stoppsignal bereitzustellen.

2. Manipulator nach Anspruch 1, **dadurch gekennzeichnet, dass** die Auslöseeinrichtung (12) und/oder die Steuerungseinrichtung (10) eine Speichereinrichtung, in der Signalmuster für Steuerbefehle gespeichert sind sowie Verarbeitungsmittel (23, 24) zum Vergleich der gespeicherten Signalmuster mit eintreffenden Signalen umfasst, um bei einer Übereinstimmung eines eingetroffenen Signals mit einem gespeicherten Signalmuster ein Steuersignal an die Antriebseinrichtung bereitzustellen.

3. Manipulator nach Anspruch 2, **dadurch gekennzeichnet, dass** die Verarbeitungsmittel (18) derart ausgebildet sind, dass bei Eintreffen eines nicht gespeicherten Signalmusters eine Bereitstellung eines Stoppsignals an die Steuerungseinrichtung (10) erfolgt.

4. Manipulator nach einem der vorhergehenden Ansprüche, **dadurch gekennzeichnet, dass** die Auslöseeinrichtung (12) und die Steuerungseinrichtung (10) für eine drahtlose Signalübertragung zwischen der Auslöseeinrichtung (12) und der Steuerungseinrichtung (10) ausgebildet sind.

5. Manipulator nach einem der vorhergehenden Ansprüche, **dadurch gekennzeichnet, dass** die Auslöseeinrichtung (12) und die Steuerungseinrichtung (10) jeweils eine Sende-Empfangseinrichtung (25, 26, 27, 28) umfassen, die für eine bidirektionale Signalübertragung zwischen der Auslöseeinrichtung (12) und der Steuerungseinrichtung (10) ausgebildet ist.

6. Manipulator nach Anspruch 5, **dadurch gekennzeichnet, dass** die Sende-Empfangseinrichtungen (25, 26, 27, 28) für eine Signalübertragung auf wenigstens zwei unterschiedlichen Übertragungswegen, insbesondere auf unterschiedlichen Übertragungskanälen, ausgebildet sind.

7. Manipulator nach Anspruch 5 oder 6, **dadurch gekennzeichnet, dass** die Sende-Empfangseinrichtungen (25, 26, 27, 28) der Auslöseeinrichtung (12) und der Steuerungseinrichtung (10) für eine Bestimmung eines Abstands und/oder einer Positionierung der Auslöseeinrichtung (12) gegenüber der Steuerungseinrichtung (10) ausgebildet sind.

8. Manipulator nach einem der Ansprüche 6 oder 7, **dadurch gekennzeichnet, dass** die Steuerungseinrichtung (10) zur Bereitstellung eines Stoppsignals ausgebildet ist, sofern die Sende-Empfangseinrichtung (25, 26, 27, 28) eine Abstandsunterschreitung und/oder eine Abstandsüberschreitung und/oder eine Positionsabweichung und/oder eine Unterbrechung der Signalübertragung von der Auslöseeinrichtung (12) ermittelt.

9. Manipulator nach einem der Ansprüche 4 bis 8, **dadurch gekennzeichnet, dass** die Sende-Empfangseinrichtung (25, 26, 27, 28) für eine codierte Signalübertragung ausgebildet ist.

10. Manipulator nach einem der Ansprüche 4 bis 9, **dadurch gekennzeichnet, dass** die Sende-Empfangseinrichtung (25, 26, 27, 28) redundant ausgebildete Sende- und Empfangsmittel aufweist.

11. Manipulator nach einem der vorhergehenden Ansprüche, **dadurch gekennzeichnet, dass** der Schallempfänger (16) als Mikrofon, insbesondere als Körperschallmikrofon, ausgebildet ist.

12. Verfahren zum Betreiben eines Manipulators (1) zur Durchführung eines Handhabungs- und/oder Bearbeitungsvorgangs an einem Werkstück (2), die eine Steuerungseinrichtung (10), eine Antriebseinrichtung, ein Handhabungs- und/oder Bearbeitungswerkzeug (3, 4) und eine als persönlicher Ausrüstungsgegenstand für einen Bediener ausgebildete Auslöseeinrichtung (12) umfasst, wobei die Antriebseinrichtung von der Steuerungseinrichtung (10) ansteuerbar ist, um eine Handhabungsbewegung und/oder eine Bearbeitungsbewegung und/oder eine Einstellbewegung hervorzurufen und die Auslöseeinrichtung (12) mit der Steuerungseinrichtung (10) für eine Aktivierung und/oder Deaktivierung der Antriebseinrichtung verbunden ist, wobei die Auslöseeinrichtung (12) bei Eintreffen eines Schallsignals einen Vergleich mit vorgebbaren Signalmustern vornimmt und bei Vorliegen einer Übereinstimmung zwischen Signal und Signalmuster von der Steuerungseinrichtung (10) ein Steuersignal zur Ansteuerung der Antriebseinrichtung bereitgestellt wird, **dadurch gekennzeichnet, dass** die Auslöseeinrichtung (12) wenigstens einen Sensor (17) aus der Gruppe: Neigungssensor, Geschwindigkeitssensor, Beschleunigungssensor, Positionssensor, umfasst und dass ein Sensorsignal des wenigstens einen Sensors in der Auslöseeinrichtung (12) ausgewertet wird, um bei Vorliegen einer Signaldifferenz zwischen dem Sensorsignal und einem vorgebbaren Sensorsignalpegel ein Stoppsignal bereitzustellen.

13. Verfahren nach Anspruch 12, **dadurch gekennzeichnet, dass** aufgrund des Schallsignals oder eines Signals einer Sensoreinrichtung (17) ein Stoppsignal von der Auslöseeinrichtung (12) an die Steuerungseinrichtung (10) übertragen wird, wenn keine Übereinstimmung zwischen dem Schallsignal und vorgegebenen Signalmustern ermittelt werden kann oder wenn anhand des Signals der Sensoreinrichtung (17) ein Gefährdungszustand ermittelt wird.

## Claims

1. Manipulator for performing a handling and/or machining process on a workpiece (2), comprising a control device (10), a drive device, a handling and/or machining tool (3, 4) and a trigger device (12) designed as a personal piece of equipment for an operator, wherein the drive device can be activated by the control device (10) to generate a handling movement and/or a machining movement and/or an adjusting movement and the trigger device (12) is connected to the control device (10) for activating and/or deactivating the drive device, wherein the trigger device (12) comprises a sound receiver (16, 17) for the reception of control commands of the operator (11) and is designed to provide a signal to the control device (10) when receiving a control command, **characterised in that** the trigger device (12) comprises at least one sensor (17) from the group of tilt sensor, speed sensor, acceleration sensor, position sensor, and **in that** the trigger device (12) is designed for an evaluation of a sensor signal of the at least one sensor (17), in order to provide a stop signal if there is a signal difference between the sensor signal and a presettable sensor signal level.

2. Manipulator according to claim 1, **characterised in that** the trigger device (12) and/or the control device (10) comprises(s) a memory device in which signal patterns for control commands are stored and processing means (23, 24) for comparing the stored signal patterns to oncoming signals, in order to provide a control signal to the drive device if an oncoming signal corresponds to a stored signal pattern.

3. Manipulator according to claim 2, **characterised in that** the processing means (18) are designed such that a stop signal is provided to the control device (10) at the arrival of a signal pattern that is not stored.

4. Manipulator according to any of the preceding claims, **characterised in that** the trigger device (12) and the control device (10) are designed for a wireless signal transmission between the trigger device (12) and the control device (10).

5. Manipulator according to any of the preceding claims, **characterised in that** the trigger device (12) and the control device (10) each comprises a transceiver device (25, 26, 27, 28) designed for a bidirectional signal transmission between the trigger device (12) and the control device (10).

6. Manipulator according to claim 5, **characterised in that** the transceiver devices (25, 26, 27, 28) are designed for a signal transmission on at least two different transmission paths, in particular different transmission channels.

7. Manipulator according to claim 5 or 6, **characterised in that** the transceiver devices (25, 26, 27, 28) of the trigger device (12) and of the control device (10) are designed for a determination of a distance and/or a positioning of the trigger device (12) relative to the control device (10).

8. Manipulator according to claim 6 or 7, **characterised in that** the control device (10) is designed for the provision of a stop signal if the transceiver device (25, 26, 27, 28) detects a distance shortfall and/or a distance transgression and/or a position deviation and/or an interruption of the signal transmission from the trigger device (12).

9. Manipulator according to any of claims 4 to 8, **characterised in that** the transceiver device (25, 26, 27, 28) is designed for a coded signal transmission.

10. Manipulator according to any of claims 4 to 9, **characterised in that** the transceiver device (25, 26, 27, 28) has transmitting and receiving means of a redundant design.

11. Manipulator according to any of the preceding claims, **characterised in that** the sound receiver (16) is designed as a microphone, in particular as a contact microphone.

12. Method for operating a manipulator (1) for performing a handling and/or machining process on a workpiece (2), comprising a control device (10), a drive device, a handling and/or machining tool (3, 4) and a trigger device (12) designed as a personal piece of equipment for an operator, wherein the drive device can be activated by the control device (10) to generate a handling movement and/or a machining movement and/or an adjusting movement and the trigger device (12) is connected to the control device (10) for activating and/or deactivating the drive device, wherein the trigger device (12), on arrival of a sound signal, performs a comparison with presettable signal patterns and, if there is a correspondence between the signal and the signal pattern, a control signal is provided by the control device (10) to activate the drive device, **characterised in that** the trigger device (12) comprises at least one sensor (17) from the group of tilt sensor, speed sensor, acceleration sensor, position sensor, and **in that** a sensor signal of the at least one sensor is evaluated in the trigger device (12) in order to provide a stop signal if there is a signal difference between the sensor signal and a presettable sensor signal level.

13. Method according to claim 12, **characterised in that**, in consequence of the sound signal or a signal of a sensor device (12), a stop signal is transmitted by the trigger device (12) to the control device (10) if no correspondence can be detected between the sound signal and presettable signal patterns or if a hazard condition is detected from the signal of the sensor device (17).

## Revendications

1. Manipulateur pour effectuer un processus de manipulation et/ou d'usinage sur une pièce (2), avec un dispositif de commande (10), un dispositif d'entraînement, un outil de manipulation et/ou d'usinage (3, 4) et un dispositif de déclenchement (12), qui est réalisé en tant qu'objet équipement personnel pour un utilisateur, dans lequel le dispositif d'entraînement peut être commandé par le dispositif de commande (10), afin de provoquer un mouvement de manipulation et/ou un mouvement d'usinage et/ou un mouvement de réglage et le dispositif de déclenchement (12) est relié au dispositif de commande (10) pour une activation et/ou désactivation du dispositif d'entraînement, dans lequel le dispositif de déclenchement (12) comprend un récepteur de son (16, 17) pour une réception d'instructions de commande de l'utilisateur (11) et est réalisé pour fournir un signal au dispositif de commande (10) à l'arrivée d'une instruction de commande, **caractérisé en ce que** le dispositif de déclenchement (12) comprend au moins un capteur (17) du groupe : capteur d'inclinaison, capteur de vitesse, capteur d'accélération, capteur de position, et que le dispositif de déclenchement (12) est réalisés pour une évaluation d'un signal de capteur du au moins un capteur (17), afin, en présence d'une différence de signal entre le signal de capteur et un niveau de signal de capteur pouvant être prédéfini, de fournir un signal d'arrêt.

2. Manipulateur selon la revendication 1, **caractérisé en ce que** le dispositif de déclenchement (12) et/ou le dispositif de commande (10) comprend un dispositif mémoire, dans lequel des motifs de signal pour des instructions de commande sont mis en mémoire, ainsi que des moyens de traitement (23, 24) pour comparer les motifs de signal mis en mémoire à des signaux arrivants, afin, en cas de concordance d'un signal arrivé avec un motif de signal mis en mémoire, de fournir un signal de commande au dispositif d'entraînement.

3. Manipulateur selon la revendication 2, **caractérisé en ce que** les moyens de traitement (18) sont réalisés de telle sorte que, à l'arrivée d'un motif de signal non mis en mémoire, une fourniture d'un signal d'arrêt au dispositif de commande (10) s'effectue.

4. Manipulateur selon l'une quelconque des revendications précédentes, **caractérisé en ce que** le dispositif de déclenchement (12) et le dispositif de commande (10) sont réalisés pour une transmission de signal sans fil entre le dispositif de déclenchement (12) et le dispositif de commande (10).

5. Manipulateur selon l'une quelconque des revendications précédentes, **caractérisé en ce que** le dispositif de déclenchement (12) et le dispositif de commande (10) comprennent respectivement un dispositif émetteur/récepteur (25, 26, 27, 28), qui est réalisé pour une transmission bidirectionnelle de signal entre le dispositif de déclenchement (12) et le dispositif de commande (10).

6. Manipulateur selon la revendication 5, **caractérisé en ce que** les dispositifs émetteurs/récepteurs (25, 26, 27, 28) sont réalisés pour une transmission de signal sur au moins deux voies de transmission différentes, en particulier sur des canaux de transmission différents.

7. Manipulateur selon la revendication 5 ou 6, **caractérisé en ce que** les dispositifs émetteurs/récepteurs (25, 26, 27, 28) du dispositif de déclenchement (12) et du dispositif de commande (10) sont réalisés pour une détermination d'une distance et/ou d'un positionnement du dispositif de déclenchement (12) par rapport au dispositif de commande (10).

8. Manipulateur selon l'une quelconque des revendications 6 ou 7, **caractérisé en ce que** le dispositif de commande (10) est réalisé pour la fourniture d'un signal d'arrêt, dans la mesure où le dispositif émetteur/récepteur (25, 26, 27, 28) détermine une non-atteinte de distance et/ou un dépassement de distance et/ou un écart de position et/ou une interruption de la transmission de signal par le dispositif de déclenchement (12).

9. Manipulateur selon l'une quelconque des revendications 4 à 8, **caractérisé en ce que** le dispositif émetteur/récepteur (25, 26, 27, 28) est réalisé pour une transmission de signal codé.

10. Manipulateur selon l'une quelconque des revendications 4 à 9, **caractérisé en ce que** le dispositif émetteur/récepteur (25, 26, 27, 28) présente des moyens d'émission et de réception réalisés de manière redondante.

11. Manipulateur selon l'une quelconque des revendications précédentes, **caractérisé en ce que** le récepteur de son (16) est réalisé en tant que microphone, en particulier en tant que microphone de bruit solidien.

12. Procédé pour faire fonctionner un manipulateur (1) pour effectuer un processus de manipulation et/ou d'usinage sur une pièce (2), qui comprend un dispositif de commande (10), un dispositif d'entraînement, un outil de manipulation et/ou d'usinage (3, 4) et un dispositif de déclenchement (12) réalisé en tant qu'objet d'équipement personnel pour un utilisateur, dans lequel le dispositif d'entraînement peut être commandé par le dispositif de commande (10), afin de provoquer un mouvement de manipulation et/ou un mouvement d'usinage et/ou un mouvement de réglage et le dispositif de déclenchement (12) est relié au dispositif de commande (10) pour une activation et/ou désactivation du dispositif d'entraînement, dans lequel le dispositif de déclenchement (12), à l'arrivée d'un signal sonore, réalise une comparaison avec des motifs de signal pouvant être prédéfinis et, en présence d'une concordance entre le signal et le motif de signal, un signal de commande pour commander le dispositif d'entraînement est fourni par le dispositif de commande (10), **caractérisé en ce que** le dispositif de déclenchement (12) comprend au moins un capteur (17) du groupe : capteur d'inclinaison, capteur de vitesse, capteur d'accélération, capteur de position, et qu'un signal de capteur du au moins un capteur dans le dispositif de déclenchement (12) est évalué, afin, en présence d'une différence de signal entre le signal de capteur et un niveau de signal de capteur pouvant être prédéfini, de fournir un signal d'arrêt.

13. Procédé selon la revendication 12, **caractérisé en ce que**, sur la base du signal sonore ou d'un signal d'un dispositif capteur (17), un signal d'arrêt est transmis par le dispositif de déclenchement (12) au dispositif de commande (10), lorsqu'aucune concordance ne peut être déterminée entre le signal sonore et les motifs de signal prédéfinis, ou lorsqu'un état de risque est déterminé sur la base du signal du dispositif capteur (17).
